**Europäisches Patentamt**

**European Patent Office**

**Office européen des brevets**

(19)

(11) Numéro de publication : **0 515 981 B1**

(12)

# FASCICULE DE BREVET EUROPEEN

(45) Date de publication du fascicule du brevet :
23.08.95 Bulletin 95/34

(51) Int. Cl.⁶ : **G01P 9/04**

(21) Numéro de dépôt : **92108577.5**

(22) Date de dépôt : **21.05.92**

(54) **Dispositif de mesure d'une vitesse angulaire.**

(30) Priorité : **31.05.91 FR 9106708**

(43) Date de publication de la demande :
**02.12.92 Bulletin 92/49**

(45) Mention de la délivrance du brevet :
**23.08.95 Bulletin 95/34**

(84) Etats contractants désignés :
**CH DE GB IT LI SE**

(56) Documents cités :
**EP-A- 0 161 049**
**DE-A- 3 805 250**
**US-A- 4 899 587**

(73) Titulaire : **ASULAB S.A.**
**Faubourg du Lac 6**
**CH-2501 Bienne (CH)**

(72) Inventeur : **Dalla Piazza, Silvio**
**Passage d'Erguel 6**
**CH-2610 St. Emier (CH)**

(74) Mandataire : **de Montmollin, Henri et al**
**ICB**
**Ingénieurs Conseils en Brevets SA**
**Rue des Sors 7**
**CH-2074 Marin (CH)**

EP 0 515 981 B1

## Description

La présente invention a pour objet un dispositif de mesure d'une vitesse angulaire comportant :

- un transducteur destiné à tourner à ladite vitesse angulaire;
- des moyens pour produire un signal d'excitation ayant une première fréquence;
- des moyens pour exciter une première vibration dudit transducteur en réponse audit signal d'excitation;
- des moyens pour produire un signal de détection comportant au moins une composante ayant une amplitude représentative de l'amplitude d'une deuxième vibration dudit transducteur, ladite deuxième vibration étant couplée à ladite première vibration et ayant une amplitude représentative de ladite vitesse angulaire; et
- des moyens pour produire un signal de mesure représentatif de ladite vitesse angulaire en réponse audit signal de détection.

Il est bien connu qu'un transducteur utilisé dans un dispositif répondant à la définition ci-dessus possède un axe, au sens mathématique du terme, qui peut être appelé axe principal, et que le signal qu'il produit est une mesure de sa vitesse angulaire autour de cet axe principal ou, en d'autres termes, de la projection sur cet axe principal du vecteur représentant sa vitesse angulaire.

En outre, un tel dispositif est évidemment destiné à mesurer, en fait, la vitesse angulaire d'un objet auquel ce transducteur est fixé.

Pour ne pas compliquer inutilement la description qui va suivre, on utilisera dans celle-ci le terme "vitesse angulaire du transducteur" pour désigner la vitesse angulaire, autour de l'axe principal mentionné ci-dessus, de l'objet auquel est fixé ce transducteur.

Le brevet US-A-4 899 587, par exemple, décrit un transducteur utilisable dans un tel dispositif.

Ce transducteur comporte deux diapasons ayant une base commune qui sont découpés chimiquement, avec cette base, dans une plaquette mince de quartz de coupe Z de manière que l'axe longitudinal de ces diapasons soit sensiblement parallèle à l'axe Y, ou axe mécanique, du quartz. Des électrodes d'excitation d'une première vibration du transducteur sont disposées sur les branches de l'un des diapasons de manière à provoquer une flexion alternative et périodique de ces branches dans le plan du transducteur lorsqu'elles reçoivent un signal d'excitation E d'un circuit électronique adéquat.

Les deux diapasons étant couplés mécaniquement par leur base commune, les branches du deuxième diapason subissent également une flexion alternative et périodique dans le plan du transducteur en réponse à ce signal d'excitation E.

Lorsque ce signal d'excitation E est appliqué au transducteur, et que ce dernier est entraîné en rotation autour d'un axe parallèle à l'axe longitudinal des diapasons, les branches de ces derniers sont soumises à la force de Coriolis résultant de cette rotation. Cette force de Coriolis modifie la vibration du transducteur, qui peut alors être considérée comme étant formée de la superposition de la première vibration décrite ci-dessus et d'une deuxième vibration qui est constituée par une vibration de flexion des branches des diapasons dans une direction perpendiculaire au plan du transducteur.

Des électrodes de détection sont disposées sur les branches du deuxième diapason du transducteur de manière à produire un signal de détection D en réponse à cette deuxième vibration.

Le brevet US-A-4 899 587 ne décrit aucun circuit susceptible de traiter ce signal de détection D pour produire un signal de mesure de la vitesse angulaire du transducteur.

Le brevet US-A-4 671 112, qui décrit un autre type de transducteur utilisable dans un dispositif de mesure d'une vitesse angulaire, décrit également un circuit qui pourrait être utilisé pour produire un signal de mesure de la vitesse angulaire du transducteur du brevet US-A-4 899 587, ou de tout autre transducteur destiné au même usage.

Ce circuit comporte un circuit mélangeur classique, qui réalise le mélange d'un premier signal P ayant une amplitude proportionnelle à l'amplitude du signal de détection D avec un deuxième signal, dit signal de référence F, qui a une amplitude proportionnelle à l'amplitude du signal d'excitation E.

Dans ce circuit, le signal de mélange produit par ce circuit mélangeur est filtré par un filtre passe-bas qui supprime sa composante alternative et ne laisse passer que sa composante continue, cette dernière étant ensuite amplifiée par un amplificateur à courant continu qui délivre à sa sortie un signal de mesure de la vitesse angulaire du transducteur. Ce dernier signal sera appelé signal M dans la suite de cette description.

Pour simplifier les considérations qui vont suivre, on admettra que les signaux E, F, D et P sont sinusoïdaux, que le signal F est en phase avec le signal E et que le signal P est également en phase avec le signal D.

Dans ces conditions, le signal E peut être exprimé par l'équation :

$$E = \hat{E} \sin \cdot \omega t \quad (1)$$

dans laquelle $\hat{E}$ et $\omega$ sont respectivement l'amplitude et la pulsation de ce signal E, et le signal F peut être exprimé par l'équation :

$$F = K1 \cdot \hat{E} \cdot \sin \omega t \quad (2)$$

dans laquelle K1 est le gain du circuit produisant le signal F à partir du signal E.

Il est d'autre part bien connu que le signal de détection D comporte une première composante constituée par le signal qui apparaît entre les électrodes de détection du transducteur lorsque la vitesse angulaire de celui-ci est nulle, et une deuxième composante constituée par le signal qui se superpose à cette première composante lorsque la vitesse angulaire du transducteur n'est pas nulle.

La première composante du signal D, qui sera appelée composante $D_1$ dans la suite de cette description, peut être exprimée par l'équation :

$$D_1 = \hat{D}_1 \cdot \sin(\omega t + \emptyset_1) \quad (3)$$

dans laquelle $\hat{D}_1$ et $\emptyset_1$ sont respectivement l'amplitude de cette composante $D_1$ et son déphasage par rapport au signal d'excitation E, ces deux termes étant constants et ne dépendant que du transducteur utilisé mais, bien entendu, pas de sa vitesse angulaire.

La deuxième composante du signal D, qui sera appelée composante $D_2$, peut être exprimée par l'équation :

$$D_2 = \hat{D}_2 \cdot \sin(\omega t + \emptyset_1 + \emptyset_2) \quad (4)$$

dans laquelle $\hat{D}_2$ et $\emptyset_2$ sont respectivement l'amplitude de cette composante $D_2$, qui dépend de la vitesse angulaire du transducteur, et le déphasage de cette composante $D_2$ par rapport à la composante $D_1$, qui est également constante et indépendante de la vitesse angulaire du transducteur.

Le signal D, qui est constitué par la superposition de ses composantes $D_1$ et $D_2$, est donc exprimé par l'équation :

$$D = \hat{D}_1 \cdot \sin(\omega t + \emptyset_1) + \hat{D}_2 \cdot \sin(\omega t + \emptyset_1 + \emptyset_2) \quad (5)$$

Le signal P mentionné ci-dessus peut donc être exprimé par l'équation :

$$P = K2 \cdot [\hat{D}_1 \cdot \sin(\omega t + \emptyset_1) + \hat{D}_2 \cdot \sin(\omega t + \emptyset_1 + \emptyset_2)] \quad (6)$$

dans laquelle K2 est le gain du circuit produisant le signal P à partir du signal D.

Comme cela a été mentionné ci-dessus, les signaux F et P sont mélangés, et le signal résultant de ce mélange est filtré par un filtre passe-bas qui ne laisse passer que sa composante continue, cette dernière étant finalement amplifiée par un amplificateur à courant continu qui délivre le signal de mesure M.

On voit facilement que, dans ces conditions, ce signal M est exprimé par l'équation :

$$M = K3 \cdot [\hat{D}_1 \cdot \cos\emptyset_1 + \hat{D}_2 \cdot \cos(\emptyset_1 + \emptyset_2)] \quad (7)$$

dans laquelle K3 est égal au produit des gains K1 et K2 mentionnés ci-dessus, du gain du filtre passe-bas, du gain de l'amplificateur à courant continu, et d'un facteur 1/2 qui provient du calcul de l'équation (7) à partir des équations (1) et (6).

Comme cela a déjà été mentionné, l'amplitude $\hat{D}_1$ de la composante $D_1$ du signal D et les déphasages $\emptyset_1$ et $\emptyset_2$ définis ci-dessus ne dépendent que du transducteur utilisé mais pas de la vitesse angulaire de celui-ci, le seul facteur dépendant de cette vitesse angulaire dans l'équation (7) étant donc l'amplitude $\hat{D}_2$ de la composante $D_2$ du signal D.

Le signal M comporte donc une composante constante $M_1$ qui est représentée par le terme $K3 \cdot \hat{D}_1 \cdot \cos\emptyset_1$ de l'équation (7), et une composante $M_2$ variable en fonction de la vitesse angulaire du transducteur qui est représentée par le terme $K3 \cdot \hat{D}_2 \cdot \cos(\emptyset_1 + \emptyset_2)$ de cette équation (7).

Or, en première approximation, le déphasage $\emptyset_1$ est nul, car la vibration du transducteur qui crée la composante $D_1$ du signal D est en phase avec celle qui est provoquée par le signal d'excitation E. En outre, toujours en première approximation, le déphasage $\emptyset_2$ est égal à $\pi/2$ puisque, lorsque la vitesse angulaire du transducteur n'est pas nulle, l'élongation de chaque point de ce transducteur qui vibre dans la vibration qui crée la composante $D_2$ du signal D est proportionnelle à la force de Coriolis qui s'exerce sur lui, que cette force de Coriolis est proportionnelle à la vitesse de ce point dans la vibration qui crée la composante $D_1$ du signal D, et que cette vitesse est déphasée de $\pi/2$ par rapport à l'élongation de ce point dans cette dernière vibration, élongation qui est évidemment en phase avec le signal d'excitation E.

Dans cette première approximation, le signal M est donc indépendant de la vitesse angulaire du transducteur puisque le facteur $\cos(\emptyset_1 + \emptyset_2)$ de la composante $M_2$ de ce signal M est égal à zéro.

En pratique, les déphasages $\emptyset_1$ et $\emptyset_2$ sont en général légèrement différents de zéro et, respectivement, de $\pi/2$ à cause des pertes mécaniques dont le transducteur est le siège.

Le facteur $\cos(\emptyset_1 + \emptyset_2)$ de la composante $M_2$ du signal M n'est donc pas nul, et ce signal M est donc effectivement variable en fonction de la vitesse angulaire du transducteur.

Mais ce facteur $\cos(\emptyset_1 + \emptyset_2)$ est toujours très faible puisque la somme des déphasages $\emptyset_1 + \emptyset_2$ est proche de $\pi/2$, de sorte que la composante $M_2$ du signal M est toujours beaucoup plus petite que la composante $M_1$, à moins que la vitesse angulaire du transducteur, et donc l'amplitude $\hat{D}_2$ de la composante $D_2$ du signal D, ne soient très importantes.

On voit que le circuit décrit par le brevet US-A- 4 671 112 ne peut pas très bien être utilisé dans un dispositif de mesure d'une vitesse angulaire relativement faible, car alors le signal M qu'il produit est constitué essentiellement d'une composante $M_1$ indépendante de cette vitesse angulaire à laquelle se superpose une composante $M_2$ ayant une amplitude faible, voire même très faible, par rapport à celle de cette composante $M_1$. Un tel signal M est difficile à utiliser pratiquement.

Il faut noter que ce même inconvénient se présente avec tous les circuits du même genre que celui qui est décrit dans ce brevet US-A-4 671 112, c'est-à-dire les circuits qui réalisent, d'une manière ou d'une autre, le mélange d'un signal produit directement ou indirectement par les électrodes de détection du transducteur avec un signal dérivé du signal d'excitation de ce transducteur.

En d'autres termes, la sensibilité des dispositifs de mesure d'une vitesse angulaire utilisant de tels circuits est faible.

En outre, la présence dans de tels circuits d'amplificateurs analogiques dont les composants ont des caractéristiques qui peuvent varier en fonction du temps et/ou de la température a comme conséquence que le signal M produit par ces circuits varie également en fonction de ces paramètres. Ce signal M n'est donc pas stable.

On peut évidemment imaginer de compléter ce genre de circuit par un circuit capable de soustraire du signal M un signal de compensation constant, égal à la composante $M_1$ de celui-ci de manière à ne conserver que la composante utile $M_2$ de ce signal M, et d'amplifier autant que nécessaire le signal résultant de cette soustraction.

Mais l'amplitude $\hat{D}_1$ et le déphasage $\emptyset_1$ de la composante $D_1$ du signal D peuvent varier d'un transducteur à l'autre, même pour des transducteurs d'un même type. La production du signal de compensation mentionné ci-dessus implique donc non seulement la mesure de cette amplitude $\hat{D}_1$, ce qui ne pose en général pas de problème particulier, mais également la mesure de ce déphasage $\emptyset_1$, ce qui est beaucoup plus délicat puisque celui-ci est très proche de zéro. En outre, les caractéristiques des composants du circuit produisant ce signal de compensation et réalisant sa soustraction du signal M peuvent également varier en fonction du temps et/ou de la température, ce qui entraîne une diminution supplémentaire de la stabilité du signal de mesure M.

La demande de brevet DE-A-3 805 250, qui décrit encore un autre type de transducteur utilisable dans un dispositif de mesure d'une vitesse angulaire, décrit également un circuit destiné à produire un signal de mesure de la vitesse angulaire de ce transducteur, ou de tout autre transducteur destiné au même usage.

Ce circuit comporte un amplificateur, un filtre, dont la nature n'est pas précisée, et un détecteur d'amplitude produisant ensemble un premier signal alternatif, qui est représentatif de l'amplitude du signal de détection fourni par le transducteur, ainsi qu'un redresseur et un convertisseur répondant à ce premier signal alternatif pour fournir un premier signal numérique, qui est également représentatif de cette amplitude du signal de détection. Ce circuit comporte encore un comparateur produisant un deuxième signal alternatif, qui est représentatif de la différence de phase entre le signal d'excitation du transducteur et le signal de détection fourni par celui-ci, ainsi qu'un deuxième redresseur et un deuxième convertisseur répondant à ce deuxième signal alternatif pour fournir un deuxième signal numérique, qui est également représentatif de cette différence de phase.

Ce même circuit comporte en outre un ordinateur qui utilise le premier signal numérique mentionné ci-dessus pour provoquer l'affichage, par un dispositif adéquat, d'une information représentative de la valeur absolue de la vitesse angulaire du transducteur, et qui utilise le deuxième signal numérique pour provoquer l'affichage d'une information représentative du sens de cette vitesse angulaire.

Comme le circuit décrit par le brevet US-A-4 671 112 mentionné ci-dessus, le circuit de la demande de brevet DE-A-3 805 250 présente l'inconvénient d'avoir une faible sensibilité et une faible stabilité dans le temps et/ou en fonction de la température. En effet dans ce dernier circuit, le premier signal alternatif est aussi formé par la superposition d'une première composante indépendante de la vitesse angulaire du transducteur et d'une deuxième composante qui dépend effectivement de cette vitesse angulaire mais dont l'amplitude peut être beaucoup plus faible que celle de la première composante. En outre, ce premier signal alternatif est produit à l'aide de circuits analogiques dont les composants ont des caractéristiques influençant l'amplitude de ce premier signal et pouvant varier en fonction du temps et/ou de la température.

Un but de la présente invention est de proposer un dispositif de mesure d'une vitesse angulaire qui ne présente pas ces inconvénients, c'est-à-dire qui fournit un signal de mesure stable et facilement exploitable quel que soit le transducteur utilisé et la vitesse angulaire de celui-ci.

Ce but est atteint par le dispositif défini par la revendication 1 annexée.

D'autres buts et avantages de la présente invention seront rendus évidents par la description qui va suivre et qui sera faite à l'aide du dessin annexé dans lequel :

- la figure 1 est un schéma bloc d'une première forme d'exécution de l'invention;
- la figure 2 est un diagramme représentant des signaux mesurés en quelques points du schéma de la figure 1; et
- les figures 3 à 5 représentent schématiquement d'autres formes d'exécution du dispositif de mesure d'une vitesse angulaire selon l'invention.

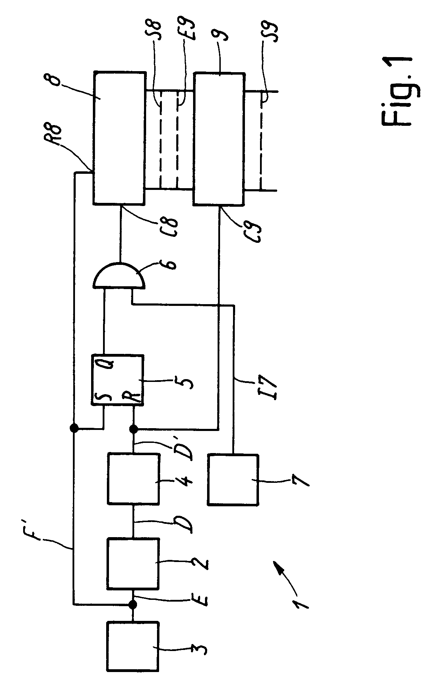

Dans le dispositif représenté à la figure 1 avec la référence 1, le transducteur destiné à tourner à la vitesse angulaire que l'on désire mesurer est symbolisé par le bloc 2.

Ce transducteur 2 n'a pas été représenté en détail car il peut être semblable à n'importe lequel des nombreux transducteurs connus, par exemple au transducteur décrit dans le brevet US-A-4 899 587 déjà mentionné.

De manière bien connue, le transducteur 2 comporte des électrodes d'excitation de sa vibration, non représentées, qui sont reliées à un circuit d'entretien de cette vibration désigné par la référence 3. Le circuit oscillant formé par le transducteur 2 et le circuit d'entretien 3 fournit un signal périodique d'excitation dont la fréquence est essentiellement déterminée par les caractéristiques du transducteur 2. Ce signal sera appelé signal d'excitation E, comme ci-dessus, dans la suite de cette description.

Pour une raison qui sera rendue évidente dans la suite de cette description, il est nécessaire de disposer, dans le dispositif de la figure 1, d'un signal logique périodique, c'est-à-dire un signal prenant périodiquement les états logiques "0" et "1", ayant la même fréquence et la même phase que le signal d'excitation E. Ce signal logique périodique sera appelé signal de référence F'.

Dans certains cas, le transducteur 2 et le circuit d'entretien 3 sont tels que le signal d'excitation E a déjà la forme et l'amplitude d'un signal logique et peut donc être directement utilisé comme signal de référence F'. C'est un tel cas qui est illustré par la figure 1.

Dans d'autres cas, le transducteur 2 et le circuit d'entretien 3 peuvent être tels que le signal d'excitation E n'a pas la forme et/ou l'amplitude d'un signal logique. Ce signal d'excitation peut même, dans certains cas, présenter une composante continue superposée à sa composante alternative. Dans de tels cas, on peut ajouter au dispositif de la figure 1 un circuit amplificateur et/ou formateur adéquat dont l'entrée est reliée à la sortie du circuit d'entretien 3 et qui est agencé de manière à produire à sa sortie un signal logique périodique en phase avec le signal E, c'est-à-dire un signal logique qui passe de son état "0" à son état "1" à chaque instant où ce signal E, ou le cas échéant sa composante alternative, passe par sa valeur zéro en croissant, c'est-à-dire de ses valeurs négatives à ses valeurs positives, et réciproquement. Ce signal logique peut alors être utilisé comme signal de référence F'.

Un tel circuit amplificateur et/ou formateur n'a pas été représenté, car sa structure dépend de la forme et de l'amplitude du signal d'excitation E, et sa réalisation ne pose pas de problème au spécialiste en la matière.

De manière également bien connue, le transducteur 2 comporte des électrodes de détection, non représentées, qui produisent le signal de détection D décrit ci-dessus.

Pour une raison qui sera également rendue évidente dans la suite de cette description, il est nécessaire de disposer, dans le dispositif de la figure 1, d'un signal logique périodique en phase avec ce signal D, qui sera appelé signal D'.

Dans le dispositif représenté à la figure 1, comme d'ailleurs dans la plupart des dispositifs du même genre, le signal de détection D n'est pas un signal logique et, suivant le genre de transducteur utilisé, il peut présenter une composante continue et une composante alternative superposées.

Le signal D est donc appliqué à l'entrée d'un circuit amplificateur et/ou formateur, désigné par la référence 4, qui est agencé de manière que sa sortie délivre le signal D' désiré, c'est-à-dire un signal logique périodique passant de son état "0" à son état "1" à chaque instant où ce signal D, ou sa composante alternative, passe par sa valeur zéro en croissant, c'est-à-dire de ses valeurs négatives à ses valeurs positives, et réciproquement.

Ce circuit amplificateur et/ou formateur 4 ne sera pas décrit en détail ici car sa structure dépend de la forme et de l'amplitude du signal D et sa réalisation ne pose pas de problème au spécialiste en la matière.

Le dispositif 1 de la figure 1 comporte encore un flip-flop 5 de type SR dont les entrées S et R reçoivent respectivement les signaux F' et D' mentionnés ci-dessus. Ce flip-flop 5 est agencé de manière que sa sortie Q prend l'état logique "1" et l'état logique "0" en réponse au passage de son entrée S et, respectivement, de son entrée R de l'état logique "0" à l'état logique "1".

La sortie Q de ce flip-flop 5 est reliée à une première entrée d'une porte ET 6 dont la deuxième entrée est reliée à la sortie d'un circuit oscillateur 7.

Ce circuit oscillateur 7 délivre un signal logique périodique formé d'impulsions qui seront appelées impulsions I7 dans la suite de cette description. En outre, comme cela sera rendu évident par la suite de cette description, la précision et la résolution de la mesure de la vitesse angulaire du transducteur 2 dépendent fortement de la précision de la fréquence des impulsions I7 fournies par l'oscillateur 7 et du rapport entre cette fréquence et celle du signal d'excitation E de ce transducteur 2. Cet oscillateur 7 est donc agencé de manière que la fréquence des impulsions I7 soit stable et beaucoup plus élevée, par exemple plusieurs centaines ou même plusieurs milliers de fois plus élevée, que la fréquence de ce signal E. Cet oscillateur 7 peut être, par exemple, un oscillateur à quartz.

La sortie de la porte 6 est reliée à l'entrée d'horloge C8 d'un compteur 8 formé, de manière classique, d'une pluralité de flip-flops qui n'ont pas été représentés séparément.

Le compteur 8 comporte en outre une entrée de remise à zéro R8 qui est reliée à l'entrée S du flip-flop 5 et qui reçoit donc également le signal F', et il est agencé de manière que les sorties des flip-flops qui le composent prennent toutes l'état logique "0" lorsque ce signal F' passe de l'état logique "0" à l'état logique "1".

Ces sorties des flip-flops qui composent le compteur 8 seront appelées sorties de ce compteur 8 et désignées, ensemble, par la référence S8, et le nombre binaire formé par les états logiques "0" ou "1" de ces sorties S8 sera appelé nombre B8 dans la suite de cette description.

Les sorties S8 du compteur 8 sont reliées, chacune, à l'une des entrées d'un circuit de mémoire 9 qui est du type bien connu souvent appelé par son nom anglais de "latch" et qui est formé du même nombre de flip-flops que le compteur 8. Le nombre B8 mentionné ci-dessus est donc présent en permanence aux entrées de ce circuit de mémoire 9 qui seront désignées, ensemble, par la référence E9.

De manière classique, le circuit de mémoire 9 comporte une entrée de commande C9, qui est reliée à la sortie de l'amplificateur 4 et qui reçoit donc le signal D', et des sorties, désignées ensemble par la référence S9, qui sont constituées par les sorties des flip-flops qui composent ce circuit de mémoire 9.

Le nombre binaire formé par les états logiques "0" ou "1" de ces sorties S9 sera appelé nombre B9 dans la suite de cette description.

Toujours de manière classique, le circuit de mémoire 9 est agencé de manière que l'état logique de chacune de ses entrées soit transféré à la sortie correspondante, ou en d'autres termes que le nombre B9 devienne égal au nombre B8, en réponse au passage de son entrée C9 de l'état logique "0" à l'état logique "1".

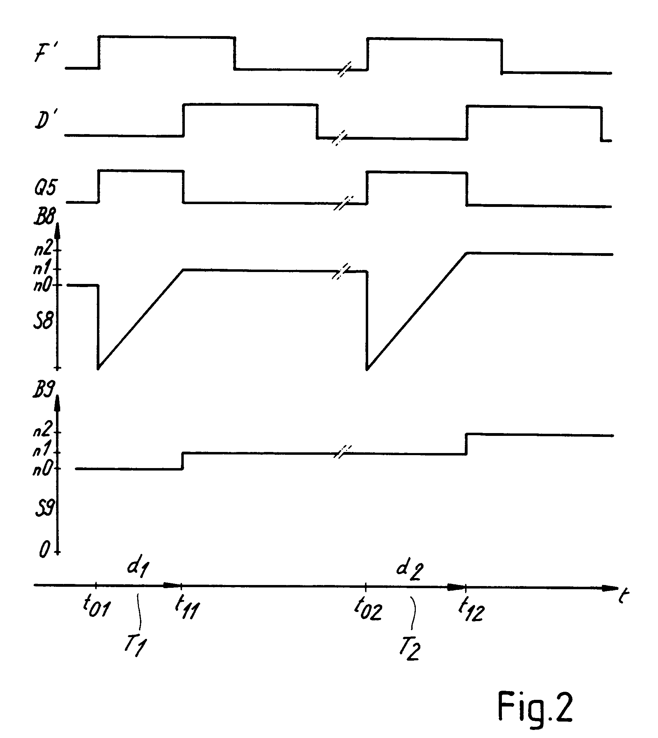

Le fonctionnement du dispositif 1 de la figure 1 va être décrit à l'aide de la figure 2 dans laquelle les divers diagrammes sont désignés par les mêmes références que les signaux qu'ils représentent.

Dans cette description, les instants où les signaux F' et D' passent de l'état logique "0" à l'état logique "1" seront respectivement appelés instants $t_0$ et $t_1$, et les périodes séparant chaque instant $t_0$ de l'instant $t_1$ immédiatement suivant seront appelées périodes T. Le cas échéant, ces références seront affectées d'un indice, ou d'un indice supplémentaire, pour permettre de les distinguer les unes des autres.

Avant l'instant $t_{01}$ qui est pris arbitrairement comme point de départ de cette description, les nombres B8 et B9 définis ci-dessus sont égaux, pour une raison qui sera rendue évidente par la suite, et ont une valeur $n_0$.

A l'instant $t_{01}$, le passage du signal F' de son état logique "0" à son état logique "1" provoque la remise à zéro du compteur 8 et la mise à l'état logique "1" de la sortie Q du flip-flop 5. Le nombre B8 devient donc égal à zéro, mais le nombre B9 garde sa valeur $n_0$.

Immédiatement après sa remise à zéro, le compteur 8 commence à compter les impulsions I7 qui sont transmises à son entrée C8 par la porte 6 grâce au fait que la sortie Q du flip-flop 5 est maintenant à l'état logique "1". Le nombre B8 augmente donc d'une unité à chacune des impulsions I7 reçues par l'entrée C8 du compteur 8, mais le nombre B9 ne se modifie pas.

A l'instant $t_{11}$, qui est l'instant $t_1$ qui suit immédiatement l'instant $t_{01}$, le passage du signal D' de son état logique "0" à son état logique "1" provoque la remise à l'état logique "0" de la sortie Q du flip-flop 5, ce qui bloque la porte 6 et entraîne l'arrêt du compteur 8 dont l'entrée C8 ne reçoit plus d'impulsion. Le nombre B8 a atteint, à cet instant $t_{11}$, une valeur $n_1$ qui est égale au nombre d'impulsions I7 produites par l'oscillateur 7 entre les instants $t_{01}$ et $t_{11}$, c'est-à-dire pendant la période $T_1$.

Au même instant $t_{11}$, le même passage du signal D' de son état logique "0" à son état logique "1" provoque également le transfert du nombre B8 aux sorties S9 du circuit de mémoire 9. Le nombre B9 prend donc également la valeur $n_1$.

Comme la fréquence des impulsions I7 est stable, cette valeur $n_1$ du nombre B9 est proportionnelle à la durée $d_1$ de la période $T_1$.

On voit facilement que le processus décrit ci-dessus se répète à chaque instant $t_0$, par exemple à l'instant $t_{02}$ indiqué dans la figure 2. Dans cet exemple, après l'instant $t_{12}$ qui suit immédiatement cet instant $t_{02}$, le nombre B9 prend la valeur $n_2$ qui est proportionnelle à la durée $d_2$ de la période $T_2$.

D'une manière générale, le nombre B9 prend, à chaque instant $t_1$, une valeur $n$ proportionnelle à la durée $d$ de la période $T$ qui se termine à cet instant $t_1$, et donc au déphasage du signal D' par rapport au signal F'. Ce déphasage, qui sera appelé $\emptyset$ dans la suite de cette description, est donc donné par l'équation :

$$\emptyset = n \cdot T_7 \cdot \omega \quad (8)$$

dans laquelle $T_7$ est la période des impulsions I7 et $\omega$ est, comme ci-dessus, la pulsation du signal F'.

Comme les signaux F' et D' sont respectivement en phase avec le signal d'excitation E du transducteur 2 et avec le signal de détection D produit par celui-ci, ce déphasage $\emptyset$ est aussi le déphasage de ce signal D par rapport à ce signal E.

Ce déphasage $\emptyset$ peut évidemment aussi être calculé à partir de l'équation du signal D.

On a vu ci-dessus que, selon le transducteur utilisé, ce signal D peut être sinusoïdal ou non sinusoïdal.

Dans le premier cas, ce signal D est évidemment exprimé par l'équation (5) déjà mentionnée.

Dans le deuxième cas, l'équation de ce signal D est plus complexe que cette équation (5), mais elle peut toujours être mise sous la forme d'une série de Fourier dont le premier terme non constant est identique au deuxième membre de l'équation (5) et représente la composante fondamentale du signal D. Cette composante fondamentale étant évidemment en phase avec le signal D lui-même, l'équation (5) peut donc être utilisée pour calculer le déphasage du signal D, quelle que soit la forme de celui-ci, par rapport au signal E.

Ce calcul, qui ne sera pas fait en détail ici car il ne fait appel qu'à des notions bien connues de trigonométrie et ne présente pas de difficulté particulière, montre que ce déphasage $\emptyset$ est donné par l'équation :

$$\emptyset = \emptyset_1 + \text{arctg} \frac{\hat{D}_2 \cdot \sin \emptyset_2}{\hat{D}_1 + \hat{D}_2 \cdot \cos \emptyset_2} \quad (9)$$

Ce déphasage $\emptyset$ du signal D par rapport au signal E, et donc également du signal D′ par rapport au signal E′, dépend donc de l'amplitude $\hat{D}_2$ du signal $D_2$, qui dépend elle-même de la vitesse angulaire du transducteur 2. Ce déphasage $\emptyset$, et la valeur n du nombre B9 qui lui est proportionnelle comme cela ressort de l'équation (8) ci-dessus, sont donc des mesures de cette vitesse angulaire.

En combinant les équations (8) et (9) ci-dessus, on voit facilement que la valeur n du nombre B9 à un instant $t_1$ quelconque est donnée par l'équation :

$$n = \frac{1}{T_7 \cdot \omega} \cdot (\emptyset_1 + \operatorname{arctg} \frac{\hat{D}_2 \cdot \sin \emptyset_2}{\hat{D}_1 + \hat{D}_2 \cdot \cos \emptyset_2}) \quad (10)$$

Cette équation montre que, comme le signal M représenté par l'équation (7) ci-dessus, la valeur n du nombre B9 comporte une première composante, $n_{v0}$, indépendante de la vitesse angulaire du transducteur 2, qui est exprimée par l'équation :

$$n_{v0} = \frac{1}{T_7 \cdot \omega} \cdot \emptyset_1 \quad (11)$$

et une deuxième composante, $n_v$, qui dépend de cette vitesse angulaire et qui est exprimée par l'équation :

$$n_v = \frac{1}{T_7 \cdot \omega} \cdot \operatorname{arctg} \frac{\hat{D}_2 \cdot \sin \emptyset_2}{\hat{D}_1 + \hat{D}_2 \cdot \cos \emptyset_2} \quad (12)$$

Mais contrairement à ce qui se passe avec le signal M exprimé par l'équation (7), cette deuxième composante $n_v$ ne s'annule pas lorsque le transducteur 2 est tel que le déphasage $\emptyset_2$ est égal à $\pi/2$ puisque l'équation (12) devient alors :

$$n_v = \frac{1}{T_7 \cdot \omega} \cdot \operatorname{arctg} \frac{\hat{D}2}{\hat{D}_1} \quad (13)$$

On voit que le dispositif 1 fournit un signal de mesure, constitué par le nombre binaire B9, quelles que soient les caractéristiques du transducteur 2, ce qui n'est pas le cas du dispositif connu décrit dans le brevet US-A-4 671 112 mentionné ci-dessus. On voit en outre que ce signal de mesure est beaucoup plus stable que celui qui est fourni par ce dispositif connu, puisqu'il ne dépend absolument pas du gain d'un ou de plusieurs circuits de type analogique.

Le déphasage $\emptyset_1$ de la composante $D_1$ du signal de détection D par rapport au signal d'excitation E est toujours proche de zéro, voire même égal à zéro.

Lorsque le dispositif 1 est destiné à mesurer des vitesses angulaires relativement élevées, la première composante $n_{v0}$ de la valeur n du nombre B9 peut donc être négligée, car elle est faible vis-à-vis de la deuxième composante $n_v$ de cette valeur n.

Par contre, lorsque le dispositif 1 est destiné à mesurer des vitesses angulaires faibles et que le déphasage $\emptyset_1$ de son transducteur 2 est différent de zéro, ce qui est généralement le cas, cette première composante $n_{v0}$ ne peut pas être négligée, car elle peut être plus grande que la deuxième composante $n_v$, ou être au moins du même ordre de grandeur que cette dernière.

En outre, comme le déphasage $\emptyset_1$ peut varier d'un transducteur à l'autre, cette première composante $n_{v0}$ peut également varier d'un dispositif de mesure à l'autre.

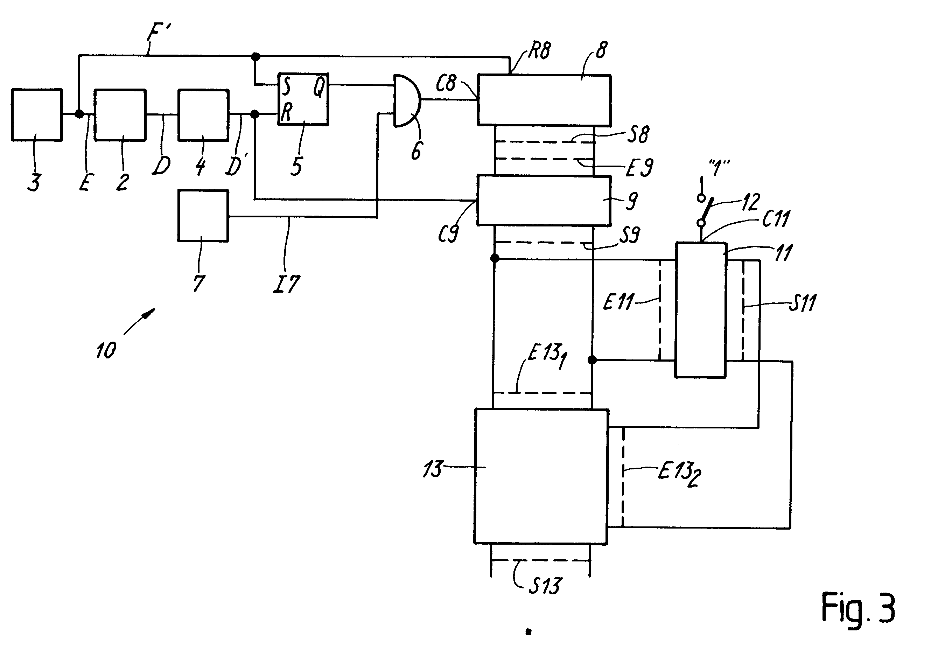

La figure 3 représente schématiquement une forme d'exécution du dispositif de mesure d'une vitesse angulaire selon l'invention qui fournit un signal de mesure de cette vitesse angulaire qui est indépendant du déphasage $\emptyset_1$ de son transducteur.

Le dispositif représenté à la figure 3 est désigné par la référence 10. Les éléments 2 à 9 de ce dispositif 10 sont identiques aux éléments qui portent les mêmes références dans le dispositif 1 de la figure 1 et sont reliés entre eux de la même manière que ces derniers. Ces éléments 2 à 9 ne seront donc pas décrits à nouveau ici.

En plus de ces éléments 2 à 9, le dispositif 10 comporte un circuit de mémoire 11, un interrupteur 12 et un circuit soustracteur binaire 13.

Le circuit de mémoire 11 a une capacité de mémorisation identique à celle du circuit de mémoire 9, et chacune de ses entrées, qui sont désignées ensemble par la référence E11, est reliée à l'une des sorties S9 de ce circuit de mémoire 9.

Pour une raison qui sera rendue évidente par la suite de cette description, le circuit de mémoire 11 est de préférence du type des circuits de mémoire qui conservent l'information même en l'absence de tension d'alimentation, cette information pouvant cependant être modifiée à volonté. De tels circuits sont souvent désignés par l'acronyme EPROM formé par les initiales des mots formant leur nom anglais "Electrically Programmable Read Only Memory".

L'entrée de commande C11 du circuit de mémoire 11 est reliée à une première borne de l'interrupteur 12 dont la deuxième borne est reliée à la borne de la source d'alimentation du dispositif 10, non représentée, dont le potentiel correspond à l'état logique "1".

Cet interrupteur 12 peut être actionné, par exemple par un bouton-poussoir non représenté, pour appliquer cet état logique "1" à cette entrée de commande C11 dans des circonstances qui seront décrites plus loin.

Le circuit soustracteur 13 comporte des premières entrées désignées ensemble par la référence $E13_1$, dont le nombre est égal au nombre des sorties S9 du circuit de mémoire 9, et dont chacune est reliée à l'une de ces dernières sorties. Ce circuit 13 comporte également des deuxièmes entrées désignées ensemble par la référence $E13_2$, dont le nombre est égal au nombre des sorties S11 du circuit de mémoire 11 et dont chacune est reliée à l'une de ces dernières.

Le circuit 13 comporte encore des sorties désignées ensemble par la référence S13, et il est agencé de manière que le nombre binaire formé par les états logiques "0" ou "1" de ces sorties S13, qui sera appelé nombre B13 dans la suite de cette description, soit égal à la différence entre le nombre B9 et le nombre binaire formé par les états logiques "0" ou "1" des sorties S11 du circuit de mémoire 11, qui sera appelé nombre B11 dans la suite de cette description.

Le fonctionnement de la partie du dispositif 10 qui est formée des éléments 2 à 9 est identique à celui du dispositif 1 et ne sera donc pas décrit en détail à nouveau.

On a vu ci-dessus que, lorsque la vitesse angulaire du transducteur 2 est nulle, le nombre B9 a la valeur $n_{v0}$ donnée par l'équation (11), qui est constante pour un transducteur 2 donné et proportionnelle au déphasage $\emptyset_1$ spécifique à ce transducteur 2.

Si, toujours lorsque la vitesse angulaire du transducteur 2 est nulle, on ferme brièvement l'interrupteur 12, le nombre B11 devient égal à ce nombre B9 et prend donc aussi la valeur $n_{v0}$. Le nombre B13, qui est alors égal à la différence de deux nombres égaux, devient donc égal à zéro.

Ainsi, après cette fermeture de l'interrupteur 12, la valeur du nombre B13 est en permanence égale à la valeur $n_v$ donnée par l'équation (12) ci-dessus, puisqu'elle est toujours égale à la différence entre la valeur n du nombre B9 donné par l'équation (10) et la valeur $n_{v0}$ de la composante constante de cette valeur n. Ce nombre B13 constitue donc un signal de mesure de la vitesse angulaire du transducteur 2 qui est indépendant du déphasage $\emptyset_1$ spécifique à ce dernier et qui, notamment, est toujours nul lorsque cette vitesse angulaire est nulle.

Cette brève fermeture de l'interrupteur 12 constitue une opération d'étalonnage du dispositif 10, opération qui peut être combinée avec les essais que subit chaque dispositif après l'assemblage de ses composants ou qui peut être réalisée après que ce dispositif a été monté à son emplacement définitif.

Il est évident que, après cet étalonnage, l'interrupteur 12 doit être rendu inactif au moins lorsque la vitesse angulaire du transducteur 2 n'est pas nulle, afin d'empêcher le remplacement du nombre B11 par un autre nombre dont la valeur serait différente de la valeur $n_{v0}$.

Ce n'est que si le transducteur 2 d'un dispositif 10 doit être remplacé par un autre transducteur, pour une raison quelconque, que l'interrupteur 12 doit à nouveau être actionné pour réétalonner ce dispositif en provoquant, de la manière décrite ci-dessus, la mémorisation par le circuit de mémoire 11 d'un nombre B9 ayant une nouvelle valeur $n_{v0}$ correspondant au nouveau transducteur.

On voit en outre qu'il est préférable d'utiliser également un circuit EPROM pour le circuit de mémoire 11, car ainsi la valeur $n_{v0}$ qu'il mémorise ne disparaît pas en cas d'interruption de la tension d'alimentation du dispositif 10.

La relation entre la vitesse angulaire du transducteur 2 et l'amplitude $\hat{D}_2$ de la composante $D_2$ du signal D qui dépend de cette vitesse angulaire est en général linéaire, mais elle peut être différente d'un transducteur à l'autre.

En outre, l'équation (12) ci-dessus montre que la valeur $n_v$ du nombre B13 ne varie pas linéairement avec cette amplitude $\hat{D}_2$, et dépend de l'amplitude $\hat{D}_1$ et du déphasage $\emptyset_2$ définis ci-dessus qui sont constants pour un transducteur donné mais peuvent également varier d'un transducteur à l'autre.

Il en découle que la relation entre la vitesse angulaire du transducteur 2 et la valeur $n_v$ du nombre B13 n'est pas linéaire et qu'elle peut varier d'un dispositif de mesure à l'autre.

Il faut cependant noter que, en pratique, le déphasage $\emptyset_2$ entre la composante $D_2$ du signal de détection D et le signal d'excitation E est très proche de $\pi/2$, de sorte que l'on peut admettre que la composante $n_v$ de la valeur n du nombre B9 est donnée par l'équation (13) ci-dessus.

Si en outre l'amplitude $\hat{D}_2$ de cette composante $D_2$ du signal de détection D est petite par rapport à l'amplitude $\hat{D}_1$ de la composante constante $D_1$ de ce signal D, ce qui est le cas lorsque la vitesse angulaire du transducteur 2 est faible, on peut admettre que la relation entre cette vitesse angulaire et la valeur n du nombre B9 est sensiblement linéaire, car on peut alors remplacer, dans l'équation (13) le terme

$$\text{arctg} \frac{\hat{D}_2}{\hat{D}_1}$$

par le terme

$$\frac{\hat{D}_2}{\hat{D}_1}.$$

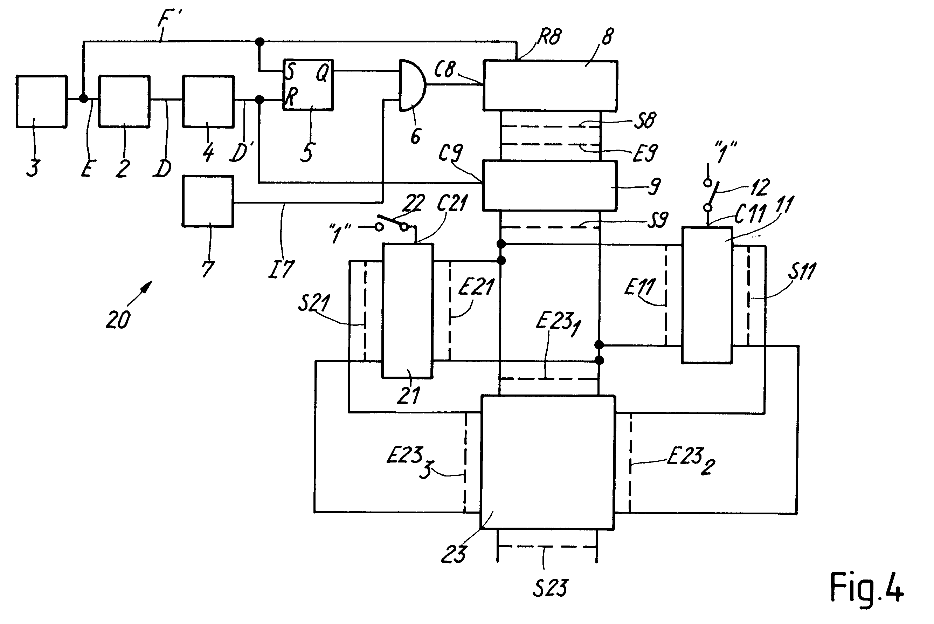

La figure 4 représente schématiquement une forme d'exécution du dispositif selon l'invention qui fournit un signal de mesure dont la relation avec la vitesse angulaire mesurée est la même pour tous les dispositifs réalisés selon cette forme d'exécution.

Les éléments 2 à 9, 11 et 12 du dispositif représenté par cette figure 4, où il est désigné par la référence 20, ne seront pas décrits à nouveau ici car ils sont identiques à ceux qui portent les mêmes références dans la figure 3 et sont reliés entre eux de la même manière que ces derniers.

En plus de ces éléments 2 à 9, 11 et 12, le dispositif 20 comporte un circuit de mémoire 21, un interrupteur 22 et un micro-ordinateur 23.

Le circuit de mémoire 21 a la même capacité de mémorisation que les circuits de mémoire 9 et 11 et, comme ce dernier, il est de préférence du type désigné par l'acronyme EPROM. Chacune des entrées de ce circuit de mémoire 21, qui sont désignées ensemble par la référence E21, est reliée à l'une des sorties S9 du circuit de mémoire 9.

L'entrée de commande C21 du circuit de mémoire 21 est reliée à une première borne de l'interrupteur 22 dont la deuxième borne est reliée, comme la deuxième borne de l'interrupteur 12, à la borne de la source d'alimentation du dispositif 20 dont le potentiel correspond à l'état logique "1".

Cet interrupteur 22 peut être actionné, par exemple par un bouton-poussoir, non représenté, pour appliquer cet état logique "1" à cette entrée de commande C21, le circuit de mémoire 21 répondant à cet état logique "1" en transférant à ses sorties, désignées ensemble par la référence S21, le nombre binaire B9 présent à ses entrées S21.

Le micro-ordinateur 23 peut être de n'importe lequel des nombreux types de micro-ordinateurs disponibles actuellement.

Dans l'exemple représenté à la figure 4, il comporte des premières, des deuxièmes et des troisièmes entrées désignées respectivement par les références $E23_1$, $E23_2$ et $E23_3$ et reliées respectivement aux sorties S9, S11 et S21 des circuits de mémoire 9, 11 et 21, et des sorties désignées ensemble par la référence S23.

La programmation du micro-ordinateur 23 ne sera pas décrite ici, parce qu'elle dépend du type de ce micro-ordinateur et qu'un spécialiste n'aura aucune peine à la réaliser à la lecture de la description du fonctionnement du dispositif 20 qui va suivre.

Le fonctionnement des éléments 2 à 9 du dispositif 20 est identique à celui des éléments du dispositif 10 de la figure 3 qui portent les mêmes références et ne sera donc pas décrit à nouveau ici.

Comme ce dispositif 10, le dispositif 20 peut être soumis à une opération d'étalonnage, par exemple au cours des contrôles qu'il subit à la fin de sa fabrication.

Cette opération d'étalonnage du dispositif 20 consiste à fermer tout d'abord brièvement l'interrupteur 12 alors que la vitesse angulaire du transducteur 2 est nulle, de manière à mémoriser dans le circuit de mémoire 11 la valeur $n_{v0}$ du nombre B9 qui correspond à ce transducteur 2, comme cela a été décrit dans le cas du dispositif 10.

On fait ensuite tourner le transducteur 2 à une vitesse connue, prédéterminée, et on ferme brièvement l'interrupteur 22.

En réponse à cette fermeture de cet interrupteur 22, le circuit de mémoire 21 mémorise la valeur du nombre B9 présent à cet instant aux sorties S9 du circuit de mémoire 9, valeur qui sera désignée par $n_{v1}$ dans la suite de cette description. En d'autres termes, le nombre binaire formé par les états logiques "0" ou "1" des sorties S21 de ce circuit de mémoire 21, nombre qui sera désigné par la référence B21 dans la suite de cette description, prend cette valeur $n_{v1}$.

On voit que, après cet étalonnage, les entrées $E23_1$, $E23_2$ et $E23_3$ du micro-ordinateur 23 reçoivent respectivement les nombres B9, dont la valeur n est donnée par l'équation (10), B11, dont la valeur $n_{v0}$ est donnée par l'équation (11), et B21, dont la valeur $n_{v1}$ est égale à la valeur que prend le nombre B9 lorsque le transducteur 2 tourne à la vitesse angulaire prédéterminée mentionnée ci-dessus.

Ce micro-ordinateur 23 est programmé pour fournir à ses sorties, qui sont désignées par la référence S23, un nombre binaire B23 dont la valeur n' est calculée à partir de la valeur n du nombre B9, en tenant compte des valeurs $n_{v0}$ et $n_{v1}$ des nombres B11 et B21, de manière qu'elle soit nulle lorsque la vitesse angulaire du transducteur 2 est nulle et qu'elle soit en outre indépendante du transducteur 2 utilisé.

Il est évident que, dans cette forme d'exécution du dispositif selon l'invention, la valeur n' du nombre B23 varie pratiquement linéairement avec la vitesse angulaire du transducteur 2 lorsque cette vitesse angulaire est suffisamment faible pour que l'on puisse admettre de remplacer, dans l'équation (13) le terme

$$\text{arctg}\,\frac{\hat{D}_2}{\hat{D}_1}$$

par le terme

$$\frac{\hat{D}_2}{\hat{D}_1}\,.$$

Dans une autre de ses formes d'exécution, qui ne sera pas décrite en détail car sa réalisation ne pose pas de problème à l'homme du métier, le dispositif selon la présente invention comporte, en plus des éléments représentés à la figure 4, un ou plusieurs circuits de mémoire supplémentaires identiques au circuit 21, dont les entrées sont également reliées aux sorties S9 du circuit de mémoire 9, dont les sorties sont également reliées à des entrées du micro-ordinateur 23, et dont chacune des entrées de commande est reliée à un interrupteur semblable à l'interrupteur 22.

Dans cette forme d'exécution, les opérations d'étalonnage du dispositif comportent, comme ci-dessus, la fermeture de l'interrupteur 12 alors que la vitesse angulaire du transducteur 2 est nulle, dans le but de mémoriser la valeur $n_{v0}$ du nombre B9 dans le circuit de mémoire 11.

Ces opérations d'étalonnage comportent en outre la mise en rotation du transducteur 2 à des vitesses angulaires prédéterminées, différentes les unes des autres, et, chaque fois que le transducteur 2 tourne à l'une de ces vitesses prédéterminées, la fermeture de l'interrupteur associé au circuit de mémoire 21 ou à un circuit de mémoire supplémentaire, de manière à mémoriser dans ce circuit de mémoire 21 et dans chaque circuit de mémoire supplémentaire la valeur du nombre B9 correspondant à l'une des vitesses prédéterminées du transducteur 2.

Dans cette forme d'exécution, le micro-ordinateur 23 est programmé pour calculer la valeur n' du nombre B23 à partir de la valeur n du nombre B9, en tenant compte des valeurs des nombres mémorisés dans les circuits de mémoire 11 et 21 et dans le ou les circuits de mémoire supplémentaires, de manière que la relation entre cette valeur n' et la vitesse angulaire du transducteur 2 soit non seulement indépendante du transducteur utilisé mais encore linéaire.

Il faut noter que les micro-ordinateurs ne comportent en général qu'un nombre limité de bornes d'entrée et/ou de sortie, et qu'il n'est donc généralement pas possible de réaliser le dispositif selon l'invention exactement dans la forme d'exécution qui vient d'être évoquée ou dans celle de la figure 4. Mais il est évident pour le spécialiste que les circuits de mémoire 11 et 21 ainsi que, le cas échéant, les circuits de mémoire supplémentaires peuvent être remplacés par des circuits bien connus ayant pratiquement la même fonction, mais dont les sorties prennent, en l'absence d'un signal de commande spécifique appliqué à une ou plusieurs entrées de commande d'état prévues à cet effet, un état où leur impédance est très élevée. Ces circuits de mémoire et le micro-ordinateur 23 sont alors reliés, d'une manière également bien connue et qui ne sera donc pas décrite ici, à un ensemble de conducteurs généralement appelé bus. Toujours de manière bien connue, le micro-ordinateur 23 est programmé de manière à appliquer à ce bus le signal de commande spécifique à un des circuits de mémoire lorsqu'il a besoin de l'information mémorisée par ce circuit pour calculer la valeur du nombre B23, cette information lui étant alors également transmise par l'intermédiaire de ce bus.

Il est évident pour le spécialiste que toutes les formes d'exécution du dispositif selon l'invention peuvent être réalisées en utilisant un micro-ordinateur programmé de manière à remplacer tous les autres circuit électroniques à l'exception du circuit d'entretien 3 et du circuit amplificateur 4. Dans ce cas, les valeurs des divers nombres binaires mentionnés ci-dessus sont enregistrées dans la mémoire interne de ce micro-ordinateur, et ce dernier est de préférence alimenté par une pile ou par une batterie pour que ces valeurs ne soient pas perdues lorsque le dispositif n'est pas utilisé.

Dans toutes les formes d'exécution du dispositif selon l'invention décrites ci-dessus, le signal de mesure de la vitesse angulaire du transducteur 2 est obtenu en mesurant le déphasage $\emptyset$ du signal de détection D par rapport au signal d'excitation E, c'est-à-dire en prenant ce dernier comme signal de référence.

Lorsque ce déphasage $\emptyset$ est faible, la précision du signal de mesure de la vitesse angulaire du transducteur 2 est également faible.

Dans un tel cas, il est possible d'obtenir un signal de mesure de cette vitesse angulaire plus précis en intervertissant les rôles des signaux F' et D', c'est-à-dire, par exemple, en reliant la sortie du circuit d'entretien 3 à l'entrée R du flip-flop 5 et à l'entrée C9 du circuit de mémoire 9, et en reliant la sortie du circuit amplificateur et/ou formateur 4 à l'entrée S du flip-flop 5 et à l'entrée de remise à zéro R8 du compteur 8.

De cette manière, c'est le signal D qui est pris comme référence, et c'est le déphasage $\emptyset' = 2\pi - \emptyset$ du signal E par rapport à ce signal D qui est mesuré. Ce déphasage $\emptyset'$ est plus grand que le déphasage $\emptyset$ si ce dernier est inférieur à $\pi$, et la précision du signal de mesure de la vitesse angulaire obtenue à partir de ce déphasage $\emptyset'$ est plus grande que dans les formes d'exécution décrites précédemment.

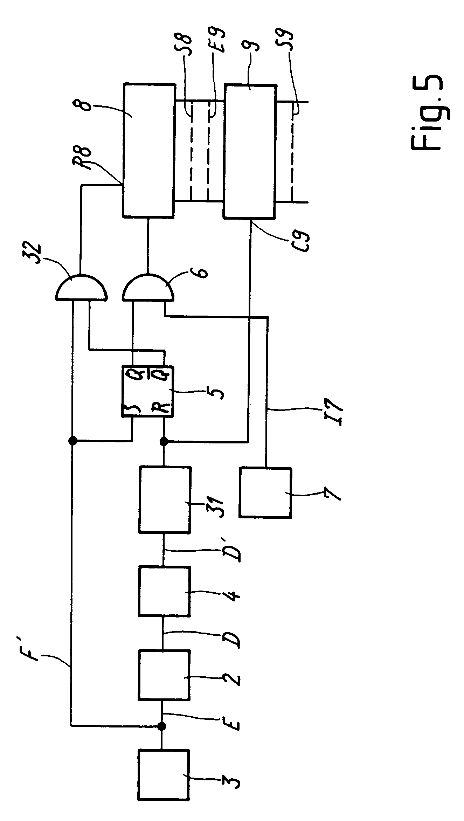

La figure 5 illustre une autre forme d'exécution du dispositif selon l'invention dans laquelle la précision du signal de mesure de la vitesse angulaire du transducteur 2 est également augmentée.

Les composants 2 à 9 représentés dans cette figure 5 sont identiques à ceux qui portent les mêmes références dans les figures 1, 3 et 4 et ne seront donc pas décrits à nouveau ici.

Dans cette forme d'exécution, le dispositif comporte, en plus de ces composants 2 à 9, un compteur 31 dont l'entrée est reliée à la sortie du circuit amplificateur et/ou formateur 4 et reçoit donc le signal D', et dont la sortie est reliée aux entrées R du flip-flop 5 et C9 du circuit de mémoire 9.

De manière classique, le contenu de ce compteur 31 augmente d'une unité chaque fois que son entrée, c'est-à-dire le signal D', passe de l'état "0" à l'état "1", et ceci jusqu'à ce que ce contenu soit égal à sa valeur maximale. Au passage suivant du signal D' de l'état "0" à l'état "1", ce contenu redevient égal à zéro et recommence ensuite à augmenter. En outre, la sortie du compteur 31 est à l'état logique "1" lorsque le contenu de ce compteur est égal à sa valeur maximale, et à l'état logique "0" le reste du temps.

Le dispositif illustré par la figure 5 comporte en outre une porte ET 32 dont les entrées sont respectivement reliées à la sortie du circuit d'entretien 3 et à la sortie $\overline{Q}$ du flip-flop 5, et dont la sortie est reliée à l'entrée R8 de remise à zéro du compteur 8.

On voit que lorsque les sorties Q et $\overline{Q}$ du flip-flop 5 sont respectivement à l'état "0" et à l'état "1", le passage du signal F' de son état "0" à son état "1" provoque, comme dans les autres formes d'exécution décrites ci-dessus, la mise à zéro du compteur 8 et, immédiatement après cette mise à zéro, le début du comptage des impulsions I7 par ce compteur 8.

Mais, dans cette forme d'exécution, ce n est que lorsque le compteur 31 a compté un certain nombre de passages du signal D' de son état "0" à son état "1", ce nombre étant égal à la capacité de comptage de ce compteur 31, que le flip-flop 5 prend à nouveau l'état où ses sorties Q et $\overline{Q}$ sont respectivement à l'état "0" et à l'état "1", ce qui interrompt le comptage des impulsions I7 par le compteur 8 et provoque le transfert du nombre B8 aux sorties S9 du circuit de mémoire 9.

En outre, tant que la sortie $\overline{Q}$ du flip-flop 5 est à l'état "0", le compteur 8 n'est pas remis à zéro par les passages du signal F' de l'état "0" à l'état "1".

Le compteur 8 compte donc les impulsions I7 pendant plusieurs périodes du signal D' entre deux de ses remises à zéro successives. Sa capacité de comptage, ainsi que la capacité de mémorisation du circuit de mémoire 9 doivent évidemment être choisies en conséquence.

Au moment où le nombre B8 est transféré des entrées E9 aux sorties S9 du circuit de mémoire 9, sa valeur est ainsi nettement plus grande que dans les formes d'exécution des figures 1, 3 et 4, toutes autres choses étant égales. La précision du signal de mesure constitué par ce nombre B8 est donc également plus grande que dans ces formes d'exécution.

Il est également évident que dans toutes les formes d'exécution du dispositif selon l'invention, le nombre binaire représentatif de la vitesse angulaire du transducteur peut être utilisé pour commander un dispositif auxiliaire qui peut être, par exemple, un dispositif d'affichage de la vitesse angulaire mesurée, ou un dispositif d'alarme fournissant simplement un signal lorsque cette vitesse angulaire atteint une valeur prédéterminée. De tels dispositifs auxiliaires ne seront pas décrits ici car ils peuvent être de natures très différentes selon les cas.

**Revendications**

1.  Dispositif de mesure d'une vitesse angulaire comportant :
    - un transducteur (2) destiné à tourner à ladite vitesse angulaire;
    - des moyens (3) pour produire un signal d'excitation périodique (E) ayant une première fréquence;
    - des moyens pour exciter une première vibration dudit transducteur (2) en réponse audit signal d'excitation (E);
    - des moyens pour produire un signal de détection périodique (D) comportant au moins une composante ($D_2$) ayant une amplitude représentative de l'amplitude d'une deuxième vibration dudit transducteur (2), ladite deuxième vibration étant couplée à ladite première vibration et ayant une amplitude représentative de ladite vitesse angulaire; et
    - des moyens (5 à 9; 5 à 9, 11 à 13; 5 à 9, 11, 12, 21 à 23; 5 à 9, 31) pour produire un signal de mesure représentatif de ladite vitesse angulaire en réponse audit signal de détection (D);
    caractérisé par le fait que lesdits moyens pour produire un signal de mesure (5 à 9; 5 à 9, 11 à 13; 5 à 9, 11, 12, 21 à 23; 5 à 9, 31) sont constitués exclusivement par des moyens pour produire un signal représentatif du déphasage ($\emptyset$; $\emptyset'$) entre ledit signal d'excitation (E) et ledit signal de détection (D), ledit déphasage ($\emptyset$; $\emptyset'$) étant représentatif de ladite amplitude de ladite composante (D2) du signal de détection (D) et donc de ladite vitesse angulaire.

2.  Dispositif de mesure selon la revendication 1, caractérisé par le fait que lesdits moyens pour produire un signal représentatif dudit déphasage ($\emptyset$; $\emptyset'$) comportent :
    - des moyens répondant audit signal d'excitation (E) pour produire un premier signal logique périodique (F') ayant ladite première fréquence et en phase avec ledit signal d'excitation (E);
    - des moyens (4) répondant audit signal de détection (D) pour produire un deuxième signal logique périodique (D') en phase avec ledit signal de détection (D);
    - des moyens (7) pour produire un signal comportant une pluralité d'impulsions périodiques (I7) ayant une deuxième fréquence supérieure à ladite première fréquence; et
    - des moyens de comptage comportant un compteur (8) et des moyens de commutation (5; 5, 31) répondant à l'un desdits signaux logiques pour provoquer l'enclenchement du comptage desdites impulsions (I7) par ledit compteur (8) et à l'autre desdits signaux logiques pour provoquer l'arrêt dudit comptage, les sorties (S8) dudit compteur (8) présentant, immédiatement après ledit arrêt, un premier nombre (B8) égal au nombre desdites impulsions (I7) comptées par ledit compteur (8) entre ledit enclenchement et ledit arrêt, et la valeur dudit premier nombre (B8) étant représentative dudit déphasage ($\emptyset$; $\emptyset'$).

3.  Dispositif de mesure selon la revendication 2, caractérisé par le fait que lesdits moyens pour produire un signal représentatif dudit déphasage ($\emptyset$; $\emptyset'$) comportent en outre des moyens (11, 12) pour mémoriser un deuxième nombre (B11) dont la valeur est égale à la valeur dudit premier nombre (B8) lorsque ladite vitesse angulaire est nulle, et des moyens (13) pour produire un troisième nombre (B13) dont la valeur est égale à la différence entre les valeurs desdits premier (B8) et deuxième (B11) nombres.

4.  Dispositif de mesure selon la revendication 2, caractérisé par le fait que lesdits moyens pour produire un signal représentatif dudit déphasage ($\emptyset$; $\emptyset'$) comportent en outre des moyens (11, 12) pour mémoriser un deuxième nombre (B11) dont la valeur est égale à la valeur dudit premier nombre (B8) lorsque ladite vitesse angulaire est nulle, des moyens (21, 22) pour mémoriser un troisième nombre (B21) dont la valeur est égale à la valeur dudit premier nombre (B8) lorsque ladite vitesse angulaire a une valeur déterminée non nulle, et des moyens (23) répondant auxdits premier, deuxième et troisième nombres pour produire un quatrième nombre (B23) ayant une valeur représentative de ladite vitesse angulaire indépendante dudit transducteur (2).

5. Dispositif de mesure selon la revendication 2, caracterisé par le fait que lesdits moyens de commutation (5, 31) comportent un deuxième compteur (31) répondant audit autre desdits signaux logiques pour provoquer l'arrêt dudit comptage lorsque ledit deuxième compteur (31) a compté un nombre déterminé des périodes dudit autre desdits signaux logiques.

**Patentansprüche**

1. Vorrichtung zum Messen einer Winkelgeschwindigkeit, umfassend:
   - einen Wandler (2), dazu bestimmt, mit dieser Winkelgeschwindigkeit umzulaufen;
   - Mittel (3) zum Erzeugen eines periodischen Erregersignals (E) mit einer ersten Frequenz;
   - Mittel zum Erregen einer ersten Vibration des Wandlers (2) in Reaktion auf das Erregersignal (E);
   - Mittel zum Erzeugen eines periodischen Erfassungssignals (D), umfassend mindestens eine Komponente ($D_2$) mit einer Amplitude, die repräsentativ ist für die Amplitude einer zweiten Vibration des Wandlers (2), welche zweite Vibration mit der ersten Vibration gekoppelt ist und eine Amplitude aufweist, die repräsentativ ist für diese Winkelgeschwindigkeit; und
   - Mittel (5 bis 9; 5 bis 9, 11 bis 13; 5 bis 9, 11, 12, 21 bis 23; 5 bis 9, 31) zum Erzeugen eines Meßsignals, das repräsentativ ist für diese Winkelgeschwindigkeit, in Reaktion auf das Erfassungssignal (D),

     dadurch gekennzeichnet, daß die genannten Mittel zum Erzeugen eines Meßsignals (5 bis 9; 5 bis 9, 11 bis 13; 5 bis 9, 11, 12, 21 bis 23; 5 bis 9, 31) ausschließlich gebildet werden von Mitteln zum Erzeugen eines Signals, das repräsentativ ist für die Phasenverschiebung (Ø, Ø') zwischen dem Erregersignal (E) und dem Erfassungssignal (D), welche Phasenverschiebung (Ø, Ø') repräsentativ ist für die Amplitude der Komponente (D2) des Erfassungssignals (D) und demgemäß für diese Winkelgeschwindigkeit.

2. Meßvorrichtung nach Anspruch 1, dadurch gekennzeichnet, daß die Mittel zum Erzeugen eines für die Phasenverschiebung (Ø, Ø') repräsentativen Signals umfassen:
   - Mittel, die auf das Erregersignal (E) reagieren zum Erzeugen eines ersten periodischen Logiksignals (F') mit der genannten ersten Frequenz und in Phase mit dem Erregersignal (E);
   - Mittel (4), die auf das Erfassungssignal (D) reagieren zum Erzeugen eines zweiten periodischen Logiksignals (D') in Phase mit dem Erfassungssignal (D);
   - Mittel (7) zum Erzeugen eines Signals, das eine Mehrzahl von periodischen Impulsen (I7) mit einer zweiten Frequenz, die höher ist als die genannte erste Frequenz, umfaßt; und
   - Zählmittel, umfassend einen Zähler (8) und Schaltmittel (5; 5, 31), die auf eines der Logiksignale reagieren zum Auslösen der Zählung der genannten Impulse (I7) durch den Zähler (8) und auf das andere der genannten Logiksignale reagieren zum Bewirken des Beendens der Zählung, wobei die Ausgänge (S8) des Zählers (8) unmittelbar nach dem Beenden eine erste Zahl (B8) aufweisen gleich der Anzahl der genannten Impulse (I7), die von dem ersten Zähler (8) zwischen dem Auslösen und dem Beenden gezählt wurden, und wobei der Wert der ersten Zahl (B8) repräsentativ ist für die Phasenverschiebung (Ø, Ø').

3. Meßvorrichtung nach Anspruch 2, dadurch gekennzeichnet, daß die Mittel zum Erzeugen eines für die Phasenverschiebung (Ø, Ø') repräsentativen Signals ferner Mittel (11, 12) umfassen zum Abspeichern einer zweiten Zahl (B11), deren Wert gleich dem Wert der ersten Zahl (B8) ist, wenn die Winkelgeschwindigkeit null ist, und Mittel (13) zum Erzeugen einer dritten Zahl (B13), deren Wert gleich der Differenz zwischen den Werten der ersten (B8) und zweiten (B11) Zahl ist.

4. Meßvorrichtung nach Anspruch 2, dadurch gekennzeichnet, daß die Mittel zum Erzeugen eines für die Phasenverschiebung (Ø, Ø') repräsentativen Signals ferner Mittel (11, 12) umfassen zum Abspeichern einer zweiten Zahl (B11), deren Wert gleich dem Wert der ersten Zahl (B8) ist, wenn die Winkelgeschwindigkeit null ist, Mittel (21, 22) zum Abspeichern einer dritten Zahl (B21), deren Wert gleich dem Wert der ersten Zahl (B8) ist, wenn die Winkelgeschwindigkeit einen von null abweichenden bestimmten Wert aufweist, und Mittel (23), die auf die erste, zweite und dritte Zahl reagieren zum Erzeugen einer vierten Zahl (B23) mit einem von dem Wandler unabhängigen Wert, der für die Winkelgeschwindigkeit repräsentativ ist.

5. Meßvorrichtung nach Anspruch 2, dadurch gekennzeichnet, daß die Schaltmittel (5, 31) einen zweiten Zähler (31) umfassen, der auf das genannte andere der Logiksignale reagiert zum Bewirken des Beendens der Zählung, wenn der zweite Zähler (31) eine bestimmte Anzahl der Perioden des genannten anderen der Logiksignale gezählt hat.

**Claims**

1. Measurement device for measuring an angular speed, comprising:
   - a transducer (2) intended to rotate at said angular speed;
   - means (3) for producing a periodic excitation signal (E) having a first frequency;
   - means for exciting a first vibration of said transducer (2) in response to said excitation signal (E);
   - means for producing a periodic detection signal (D) having at least one component (D$_2$) having an amplitude representative of the amplitude of a second vibration of said transducer (2), said second vibration being coupled to said first vibration and having an amplitude representative of said angular speed; and
   - means (5 to 9; 5 to 9, 11 to 13; 5 to 9, 11, 12, 21 to 23; 5 to 9, 31) for producing a measurement signal representative of said angular speed in response to said detection signal (D);
   characterized by the fact that said means for producing a measurement signal (5 to 9; 5 to 9, 11 to 13; 5 to 9, 11, 12, 21 to 23; 5 to 9, 31) are exclusively constituted by means for producing a signal representative of the phase-shift ($\emptyset;\emptyset'$) between said excitation signal (E) and said detection signal (D), said phase-shift ($\emptyset;\emptyset'$) being representative of said amplitude of said component (D2) of the detection signal (D) and thus of said angular speed.

2. Measurement device according to claim 1, characterized by the fact that said means for producing a signal representative of said phase-shift ($\emptyset;\emptyset'$) include:
   - means responsive to said excitation signal (E) for producing a first periodic logic signal (F') having said first frequency and in phase with said excitation signal (E);
   - means (4) responsive to said detection signal (D) for producing a second periodic logic signal (D') in phase with said detection signal (D);
   - means (7) for producing a signal comprising a plurality of periodic pulses (I7) having a second frequency greater than said first frequency; and
   - counting means including a counter (8) and switching means (5; 5, 31) responsive to one of said logic signals to start the counting of said pulses (I7) by said counter (8) and to the other of said logic signals to stop said counting, the outputs (S8) of said counter (8) presenting, immediately after said stop, a first number (B8) that is equal to the number of said pulses (I7) counted by said counter (8) between said start and said stop, and the value of said first number (B8) being representative of said phase-shift ($\emptyset;\emptyset'$).

3. Measurement device according to claim 2, characterized by the fact that said means for producing a signal representative of said phase-shift ($\emptyset;\emptyset'$) further include means (11, 12) for storing a second number (B11) having a value equal to the value of said first number (B8) when said angular speed is zero, and means (13) for producing a third number (B13) having a value equal to the difference between the values of said first (B8) and second (B11) numbers.

4. Measurement device according to claim 2, characterized by the fact that said means for producing a signal representative of said phase-shift ($\emptyset;\emptyset'$) further include means (11, 12) for storing a second number (B11) having a value equal to the value of said first number (B8) when said angular speed is zero, means (21, 22) for storing a third number (B21) having a value equal to the value of said first number (B8) when said angular speed has a first set value that is not zero, and means (23) responsive to said first, second and third numbers to produce a fourth number (B23) having a value representative of said angular speed that is independent of said transducer (2).

5. Measurement device according to claim 2, characterized by the fact that said counting means (5, 31) include a second counter (31) responsive to said other of said logic signals to stop said counting when said second counter (31) has counted a determined number of the periods of said other of said logic signals.

Fig.1

Fig.2

Fig. 3

Fig.4

EP 0 515 981 B1

Fig. 5